(19) Europäisches Patentamt
European Patent Office
Office européen des brevets

(11) EP 4 324 883 A1

(12) # EUROPEAN PATENT APPLICATION
published in accordance with Art. 153(4) EPC

(43) Date of publication:
**21.02.2024 Bulletin 2024/08**

(21) Application number: **22787933.5**

(22) Date of filing: **17.03.2022**

(51) International Patent Classification (IPC):
***C08L 79/08*** *(2006.01)* ***C08G 73/10*** *(2006.01)*
***C08K 3/013*** *(2018.01)* ***C08K 3/04*** *(2006.01)*
***C08K 7/06*** *(2006.01)* ***C08L 27/18*** *(2006.01)*

(52) Cooperative Patent Classification (CPC):
**C08G 73/10; C08K 3/013; C08K 3/04; C08K 7/06; C08L 27/18; C08L 79/08**

(86) International application number:
**PCT/JP2022/012143**

(87) International publication number:
**WO 2022/220007 (20.10.2022 Gazette 2022/42)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **15.04.2021 JP 2021069111**

(71) Applicant: **MITSUBISHI GAS CHEMICAL COMPANY, INC.**
**Chiyoda-ku**
**Tokyo 100-8324 (JP)**

(72) Inventors:
- **SUMINO, Takahiko**
**Hiratsuka-shi, Kanagawa 254-0016 (JP)**
- **SATO, Yuuki**
**Hiratsuka-shi, Kanagawa 254-0016 (JP)**

(74) Representative: **Vossius & Partner Patentanwälte Rechtsanwälte mbB**
**Siebertstrasse 3**
**81675 München (DE)**

(54) ## THERMOPLASTIC POLYIMIDE RESIN COMPOSITION AND MOLDED PRODUCT

(57) A thermoplastic polyimide resin composition containing 30 to 60 mass% of a thermoplastic polyimide resin (A), 5 to 50 mass% of carbon fiber (B), 5 to 20 mass% of a fluorine resin (C), and 1 to 40 mass% of an inorganic filler (D), and a molded product including the thermoplastic polyimide resin composition.

EP 4 324 883 A1

## Description

Technical Field

The present invention relates to a thermoplastic polyimide resin composition and a molded product.

A polyimide resin is a useful engineering plastic that has high thermal stability, high strength and high solvent resistance due to rigidity, resonance stabilization and firm chemical bond of the molecular chain thereof, and is being applied to a wide range of fields. A polyimide resin having crystallinity is further enhanced in the heat resistance, the strength and the chemical resistance thereof, and thus is expected for applications as alternatives of metals or the like. While a polyimide resin has high heat resistance, however, it has the problems of exhibiting no thermoplasticity and having low molding processability.

Vespel (registered trademark), a highly heat-resistant resin, is known as a polyimide molding material (PTL 1). This resin is difficult to process by molding due to its very low flowability even at a high temperature, and is also disadvantageous in terms of cost because it requires molding under conditions of a high temperature and a high pressure for a prolonged period of time. In contrast to this, a resin having a melting point and flowability at a high temperature, such as a crystalline resin, may be processed by molding easily and inexpensively.

Thus, a polyimide resin having thermoplasticity has been reported in recent years. Such a thermoplastic polyimide resin is excellent in molding processability in addition to the original heat resistance of the polyimide resin. The thermoplastic polyimide resin is therefore applicable to a molded article for use in an inhospitable environment to which nylon or polyester, a general purpose thermoplastic resin, is inapplicable.

For example, PTL 2 discloses a thermoplastic polyimide resin comprising a predetermined repeating structural unit, which resin is obtained by reacting a tetracarboxylic acid containing at least one aromatic ring and/or a derivative thereof, a diamine containing at least one alicyclic hydrocarbon structure, and a chain aliphatic diamine.

In the engineering plastic field, addition of various additives has been contemplated for the purpose of improvement in physical properties, impartation of functions depending on application, and the like.

For example, PTL 3 discloses a flame-retardant polyimide molding material containing a semi-aromatic polyimide resin and further containing a predetermined amount of graphite or any of combinations of two or more selected from the group consisting of graphite, a fluorine resin, and carbon fiber. PTL 4 discloses that a polyimide resin composition may be produced into a molded article easily molding processed and having high slidability and a good appearance, the polyimide resin composition containing a thermoplastic polyimide resin containing a predetermined repeating unit and a fluorine resin satisfying a predetermined requirement.

Citation List

Patent Literature

PTL 1: JP 2005-28524 A

PTL 2: WO 2013/118704

PTL 3: WO 2021/024624

PTL 4: WO 2021/024625

Summary of Invention

Technical Problem

It is mentioned that the polyimide resin composition described in PTL 4 is allowed to further contain at least one selected from the group consisting of carbon fiber and graphite for the purpose of improving various properties, such as slidability, mechanical strength, and flame resistance. However, when carbon fiber or graphite is contained in the polyimide resin composition, the specific abrasion loss tends to increase, and room for further improvement has been left in this respect. Specifically in conventional arts, among indices for slidability, it has been difficult to reduce the specific abrasion loss while the dynamic friction coefficient is kept at a low level.

An object of the present invention is to provide a thermoplastic polyimide resin composition that can be produced into a highly-slidable molded product having high rigidity and having a low dynamic friction coefficient and a small specific

abrasion loss, and a molded product containing the thermoplastic polyimide resin composition.

Solution to Problem

The present inventors have found that a resin composition containing a predetermined amount each of a thermoplastic polyimide resin, carbon fiber, a fluorine resin, and an inorganic filler can solve the above problem.
Accordingly, the present invention relates to the following.

[1] A thermoplastic polyimide resin composition comprising 30 to 60 mass% of a thermoplastic polyimide resin (A), 5 to 50 mass% of carbon fiber (B), 5 to 20 mass% of a fluorine resin (C), and 1 to 40 mass% of an inorganic filler (D).
[2] A molded product comprising the thermoplastic polyimide resin composition according to [1].

Advantageous Effects of Invention

The thermoplastic polyimide resin composition of the present invention can produce a highly-slidable molded product having high rigidity and having a low dynamic friction coefficient and a small specific abrasion loss. The resin composition and the molded product are suitably used in applications in which an excellent rigidity and sliding properties are required, for example, various bearings such as bearings for automobiles and bearings for copiers, gears, bearings, bushes, mechanical seals, seals for transmissions, and the like.

Description of Embodiments

[Thermoplastic polyimide resin composition]

A thermoplastic polyimide resin composition of the present invention (hereinafter, also simply referred to as "the composition of the present invention") contains 30 to 60 mass% of a thermoplastic polyimide resin (A), 5 to 50 mass% of carbon fiber (B), 5 to 20 mass% of a fluorine resin (C), and 1 to 40 mass% of an inorganic filler (D).
According to the thermoplastic polyimide resin composition of the present invention, it is possible to produce a highly-slidable molded product having high rigidity and having a low dynamic friction coefficient and a small specific abrasion loss. In the present invention, a flexural modulus is used as the index of "rigidity", and a bending strength is used as the index of "mechanical strength" or "strength". A dynamic friction coefficient and a specific abrasion loss are used as the indices of slidability, and smaller values of the dynamic friction coefficient and specific abrasion loss mean that the slidability is higher.
While the reason why the above effects are obtained in the thermoplastic polyimide resin composition of the present invention has not been clarified, the following may be considered.
The composition of the present invention has thermoplasticity because of containing the thermoplastic polyimide resin (A), and has relatively high heat resistance and slidability as a thermoplastic resin composition. The carbon fiber (B) contributes to improvement in rigidity, the fluorine resin (C) contributes to improvement in slidability, and thus allowing the composition of the present invention to contain a predetermined amount of these enables high rigidity and slidability to be imparted.
However, in a molded product comprising a resin composition containing the carbon fiber (B), the rigidity increases, but the specific abrasion loss tends to increase even if the fluorine resin (C) is contained. It is considered that the composition of the present invention, because of further containing a predetermined amount of the inorganic filler (D), has improved the hardness of a molded product to be obtained to thereby enable an increase in the specific abrasion loss to be suppressed.

<Thermoplastic polyimide resin (A)>

The thermoplastic polyimide resin (A) used in the present invention (hereinafter, also simply referred to as "component (A)") is a thermoplastic resin, which is preferably in a powder or pellet form. The thermoplastic polyimide resin is distinguished from, for example, polyimide resins formed by closing the imide ring after shaping in a state of a polyimide precursor such as a polyamic acid and having no glass transition temperature (Tg), or polyimide resins that decompose at a temperature lower than the glass transition temperature.
Examples of the component (A) include all-aromatic thermoplastic polyimide resins, semi-aromatic thermoplastic polyimide resins, and aliphatic thermoplastic polyimide resins.
Examples of the all-aromatic thermoplastic polyimide resin include thermoplastic polyimide resins primarily containing a repeating structural unit derived from an aromatic tetracarboxylic acid component and an aromatic diamine component. As the aromatic tetracarboxylic acid component, an aromatic tetracarboxylic acid or a derivative thereof (an

anhydride or an alkyl ester compound) can be used.

Examples of a commercially available all-aromatic thermoplastic polyimide resin include "AURUM" produced by Mitsui Chemicals, Inc.

Examples of the semi-aromatic thermoplastic polyimide resin include thermoplastic polyimide resins primarily containing a repeating structural unit derived from an aromatic tetracarboxylic acid component and an aliphatic diamine component and thermoplastic polyimide resins primarily containing a repeating structural unit derived from an aliphatic tetracarboxylic acid component and an aromatic diamine component. The aliphatic diamine component may be any of chain aliphatic diamines and aliphatic diamines containing a cyclic structure. As the aliphatic tetracarboxylic acid component, a chain aliphatic tetracarboxylic acid, an aliphatic tetracarboxylic acid containing a cyclic structure, and a derivatives thereof (an anhydride or an alkyl ester compound) can be used.

Examples of the aliphatic thermoplastic polyimide resin include thermoplastic polyimide resins primarily containing a repeating structural unit derived from an aliphatic tetracarboxylic acid component and an aliphatic diamine component. The aliphatic tetracarboxylic acid component and the aliphatic diamine component are as described above.

The phrase "primarily containing" referred to herein means containing preferably 50 to 100 mol%, more preferably 75 to 100 mol%, further preferably 80 to 100 mol%, and still further preferably 85 to 100 mol% based on the total repeating structural units derived from the tetracarboxylic acid component and the diamine component constituting the main chain of the polyimide resin, and other structural units may be contained as required.

The component (A) used in the present invention is preferably a semi-aromatic thermoplastic polyimide resin and more preferably a semi-aromatic thermoplastic polyimide resin primarily containing a repeating structural unit derived from an aromatic tetracarboxylic acid component and an aliphatic diamine component, from the viewpoint that the heat resistance and the molding processability are both achieved.

More preferably, the component (A) is a polyimide resin (A1) containing a repeating structural unit represented by the following formula (1) and a repeating structural unit represented by the following formula (2) and having a content ratio of the repeating structural unit of the formula (1) with respect to the total of the repeating structural unit of the formula (1) and the repeating structural unit of the formula (2) of 20 to 70 mol%:

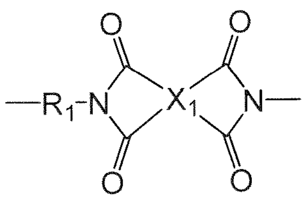

(1)

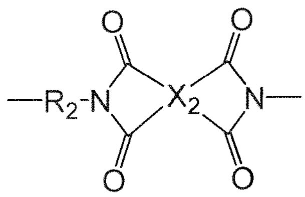

(2)

wherein $R_1$ represents a divalent aliphatic group having from 6 to 22 carbon atoms containing at least one alicyclic hydrocarbon structure; $R_2$ represents a divalent chain aliphatic group having from 5 to 16 carbon atoms; and $X_1$ and $X_2$ each independently represent a tetravalent aromatic group having from 6 to 22 carbon atoms.

Hereinafter, the polyimide resin is also simply referred to as the "polyimide resin (A1)". The polyimide resin (A1) is taken as an example, and the details will be described.

First, the repeating structural unit of the formula (1) will be described in detail below.

$R_1$ represents a divalent aliphatic group having from 6 to 22 carbon atoms containing at least one alicyclic hydrocarbon structure. The alicyclic hydrocarbon structure herein means a ring derived from an alicyclic hydrocarbon compound, and the alicyclic hydrocarbon compound may be either saturated or unsaturated and may be either monocyclic or polycyclic.

Examples of the alicyclic hydrocarbon structure include a cycloalkane ring, such as a cyclohexane ring, a cycloalkene ring, such as cyclohexene, a bicycloalkane ring, such as a norbomane ring, and a bicycloalkene ring, such as norbomene, but the alicyclic hydrocarbon structure is not limited thereto. Among these, a cycloalkane ring is preferred, a cycloalkane ring having from 4 to 7 carbon atoms is more preferred, and a cyclohexane ring is further preferred.

$R_1$ has from 6 to 22 carbon atoms, and preferably from 8 to 17 carbon atoms.

$R_1$ contains at least one alicyclic hydrocarbon structure, and preferably from 1 to 3 alicyclic hydrocarbon structures.

$R_1$ is preferably a divalent group represented by the following formula (RI-1) or (R1-2):

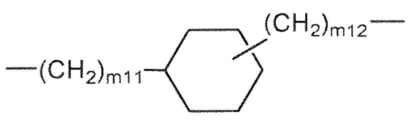

(R1-1)

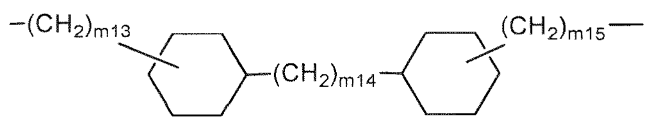

(R1-2)

wherein $m_{11}$ and $m_{12}$ each independently represent an integer of 0 to 2, preferably 0 or 1, and more preferably 1, and $m_{13}$ to mis each independently represent an integer of 0-2, and preferably 0 or 1.

$R_1$ is particularly preferably a divalent group represented by the following formula (R1-3):

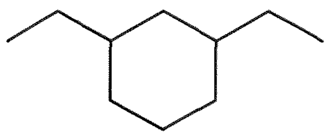

(R1-3)

In the divalent group represented by the formula (RI-3), the conformation of the two methylene groups with respect to the cyclohexane ring may be either cis or trans, and the ratio of cis and trans may be an arbitrary value.

$X_1$ represents a tetravalent aromatic group having from 6 to 22 carbon atoms. The aromatic ring in the aromatic group may be either a monocyclic ring or a condensed ring, and examples thereof include a benzene ring, a naphthalene ring, an anthracene ring, and a tetracene ring, but the aromatic ring is not limited thereto. Among these, a benzene ring and a naphthalene ring are preferred, and a benzene ring is more preferred.

$X_1$ has from 6 to 22 carbon atoms, and preferably has from 6 to 18 carbon atoms.

$X_1$ contains at least one aromatic ring, and preferably contains from 1 to 3 aromatic rings.

$X_1$ is preferably a tetravalent group represented by one of the following formulae (X-1) to (X-4):

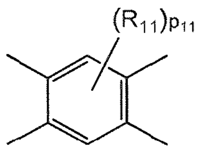

(X-1)

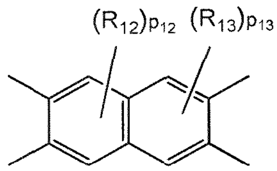

(X-2)

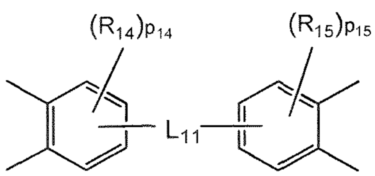

(X-3)

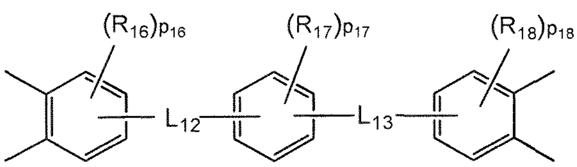

(X-4)

wherein $R_{11}$ to $R_{18}$ each independently represent an alkyl group having from 1 to 4 carbon atoms; $p_{11}$ to $p_{13}$ each independently represent an integer of 0-2, and preferably 0; $p_{14}$, $p_{15}$, $p_{16}$ and $p_{18}$ each independently represent an integer of 0-3, and preferably 0; $p_{17}$ represents an integer of 0-4, and preferably 0; and $L_{11}$ to $L_{13}$ each independently represent a single bond, an ether group, a carbonyl group or an alkylene group having from 1 to 4 carbon atoms.

$X_1$ is a tetravalent aromatic group having from 6 to 22 carbon atoms, and therefore $R_{12}$, $R_{13}$, $P_{12}$, and $p_{13}$ in the formula (X-2) are selected in such a manner that the tetravalent aromatic group represented by the formula (X-2) has from 10 to 22 carbon atoms.

Similarly, $L_{11}$, $R_{14}$, $R_{15}$, $p_{14}$, and $p_{15}$ in the formula (X-3) are selected in such a manner that the tetravalent

aromatic group represented by the formula (X-3) has from 12 to 22 carbon atoms, and $L_{12}$, $L_{13}$, $R_{16}$, $R_{17}$, $R_{18}$, $p_{16}$, $p_{17}$, and $p_{18}$ in the formula (X-4) are selected in such a manner that the tetravalent aromatic group represented by the formula (X-4) has from 18 to 22 carbon atoms.

$X_1$ is particularly preferably a tetravalent group represented by the following formula (X-5) or (X-6):

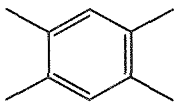

(X-5)

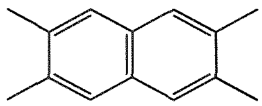

(X-6)

Next, the repeating structural unit of formula (2) will be described in detail below.

$R_2$ represents a divalent chain aliphatic group having from 5 to 16 carbon atoms, preferably from 6 to 14 carbon atoms, more preferably from 7 to 12 carbon atoms, and further preferably from 8 to 10 carbon atoms. The chain aliphatic group herein means a group derived from a chain aliphatic compound, and the chain aliphatic compound may be either saturated or unsaturated, may be in the form of either linear or branched chain, and may contain a hetero atom, such as an oxygen atom.

$R_2$ is preferably an alkylene group having from 5 to 16 carbon atoms, more preferably an alkylene group having from 6 to 14 carbon atoms, further preferably an alkylene group having from 7 to 12 carbon atoms, and particularly preferably an alkylene group having from 8 to 10 carbon atoms. The alkylene group may be either a linear alkylene group or a branched alkylene group, and is preferably a linear alkylene group.

$R_2$ preferably represents at least one selected from the group consisting of an octamethylene group and a decamethylene group, and particularly preferably represents an octamethylene group.

Another preferred embodiment of $R_2$ is a divalent chain aliphatic group having from 5 to 16 carbon atoms containing an ether group. The divalent chain aliphatic group preferably has from 6 to 14 carbon atoms, more preferably from 7 to 12 carbon atoms, and further preferably from 8 to 10 carbon atoms. Preferred examples of the group include a divalent group represented by the following formula (R2-1) or (R2-2):

$$-(CH_2)_{m21}-O-(CH_2)_{m22}- \quad (R2\text{-}1)$$

$$-(CH_2)_{m23}-O-(CH_2)_{m24}-O-(CH_2)_{m25}- \quad (R2\text{-}2)$$

wherein $m_{21}$ and $m_{22}$ each independently represent an integer of 1-15, preferably 1-13, more preferably 1-11, and further preferably 1-9; and $m_{23}$ to $m_{25}$ each independently represent an integer of 1-14, preferably 1-12, more preferably 1-10, and further preferably 1-8.

$R_2$ represents a divalent chain aliphatic group having from 5 to 16 carbon atoms (preferably from 6 to 14 carbon atoms, more preferably from 7 to 12 carbon atoms, and further preferably from 8 to 10 carbon atoms), and therefore $m_{21}$ and $m_{22}$ in the formula (R2-1) are selected so that the divalent group represented by the formula (R2-1) has from 5 to 16 carbon atoms (preferably from 6 to 14 carbon atoms, more preferably from 7 to 12 carbon atoms, and further preferably from 8 to 10 carbon atoms), i.e., $m_{21} + m_{22}$ is from 5 to 16 (preferably 6 to 14, more preferably 7 to 12, and further preferably 8 to 10).

Similarly, $m_{23}$ to $m_{25}$ in the formula (R2-2) are selected so that the divalent group represented by the formula (R2-2) has from 5 to 16 carbon atoms (preferably from 6 to 14 carbon atoms, more preferably from 7 to 12 carbon atoms, and further preferably from 8 to 10 carbon atoms), i.e., $m_{23} + m_{24} + m_{25}$ is from 5 to 16 (preferably from 6 to 14 carbon atoms, more preferably from 7 to 12 carbon atoms, and further preferably from 8 to 10 carbon atoms).

$X_2$ is defined similarly to $X_1$ in the formula (1), and preferred embodiments thereof are also the same.

The content ratio of the repeating structural unit of the formula (1) with respect to the total of the repeating structural unit of the formula (1) and the repeating structural unit of the formula (2) is 20 mol% to 70 mol%. In the case where the content ratio of the repeating structural unit of the formula (1) is in the above range, the polyimide resin may also be sufficiently crystallized in an ordinary injection molding cycle. When the content ratio is 20 mol% or more, molding processability is good, and when the content ratio is 70 mol% or less, crystallinity is good, and heat resistance is excellent.

The content ratio of the repeating structural unit of the formula (1) with respect to the total of the repeating structural unit of the formula (1) and the repeating structural unit of the formula (2) is preferably 65 mol% or less, more preferably 60 mol% or less, and further preferably 50 mol% or less from the viewpoint of exerting high crystallinity.

Among these, the content ratio of the repeating structural unit of the formula (1) with respect to the total of the

repeating structural unit of the formula (1) and the repeating structural unit of the formula (2) is preferably 20 mol% or more and less than 40 mol%. When the content ratio falls within this range, the crystallinity of the polyimide resin (A1) increases, and thus, a molded product superior in heat resistance can be obtained.

The content ratio described above is preferably 25 mol% or more, more preferably 30 mol% or more, further preferably 32 mol% or more from the viewpoint of molding processability, and is further preferably 35 mol% or less from the viewpoint of exerting high crystallinity.

The content ratio of the total of the repeating structural unit of the formula (1) and the repeating structural unit of the formula (2) with respect to the total repeating structural units constituting the polyimide resin (A1) is preferably 50 to 100 mol%, more preferably 75 to 100 mol%, further preferably 80 to 100 mol%, and still further preferably 85 to 100 mol%.

The polyimide resin (A1) may further contain a repeating structural unit represented by the following formula (3). In this case, the content ratio of the repeating structural unit of formula (3) with respect to the total of the repeating structural unit of formula (1) and the repeating structural unit of formula (2) is preferably 25 mol% or less. The lower limit thereof is not particularly limited but needs to exceed 0 mol%.

The content ratio is preferably 5 mol% or more, and more preferably 10 mol% or more, from the viewpoint of enhancement of the heat resistance, and is preferably 20 mol% or less, and more preferably 15 mol% or less, from the viewpoint of maintenance of the crystallinity.

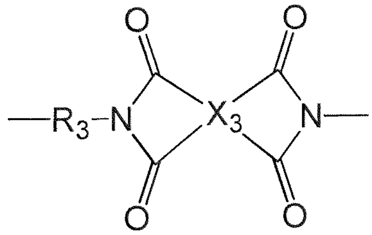

(3)

wherein $R_3$ represents a divalent group having from 6 to 22 carbon atoms containing at least one aromatic ring; and $X_3$ represents a tetravalent group having from 6 to 22 carbon atoms containing at least one aromatic ring.

$R_3$ is a divalent group having from 6 to 22 carbon atoms containing at least one aromatic ring. The aromatic ring may be either a monocyclic ring or a condensed ring, and examples thereof include a benzene ring, a naphthalene ring, an anthracene ring and a tetracene ring, but the aromatic ring is not limited thereto. Among these, a benzene ring and a naphthalene ring are preferred, and a benzene ring is more preferred.

$R_3$ has from 6 to 22 carbon atoms, and preferably has from 6 to 18 carbon atoms.

$R_3$ contains at least one aromatic ring, and preferably contains from 1 to 3 aromatic rings.

The aromatic ring may also be bonded to a monovalent or divalent electron-attracting group. Examples of the monovalent electron-attracting group include a nitro group, a cyano group, a p-toluenesulfonyl group, halogen, an alkyl halide group, a phenyl group, and an acyl group. Examples of the divalent electron-attracting group include alkylene halide groups such as alkylene fluoride groups (e.g., $-C(CF_3)_2-$ and $-(CF_2)_p-$ (wherein p is an integer of 1-10)), as well as -CO-, $-SO_2-$, -SO-, -CONH-, and -COO-.

$R_3$ is preferably a divalent group represented by the following formula (R3-1) or (R3-2):

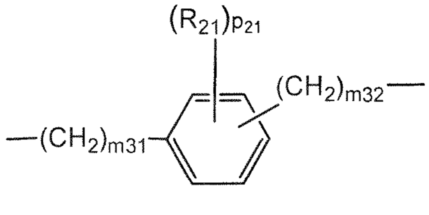

(R3-1)

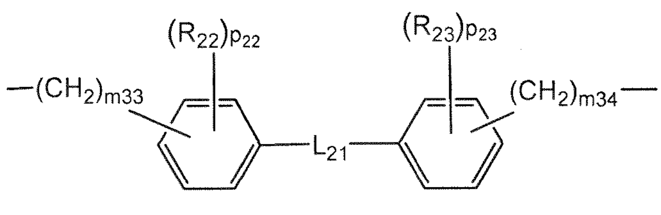

(R3-2)

wherein $m_{31}$ and $m_{32}$ each independently represent an integer of 0-2, and preferably 0 or 1; $m_{33}$ and $m_{34}$ each independently represent an integer of 0-2, and preferably 0 or 1; $R_{21}$, $R_{22}$ and $R_{23}$ each independently represent an alkyl group having from 1 to 4 carbon atoms, an alkenyl group having from 2 to 4 carbon atoms or an alkynyl group having from 2 to 4 carbon atoms; $p_{21}$, $p_{22}$ and $p_{23}$ each represent an integer of 0-4, and preferably 0; and $L_{21}$ represents a

single bond, an ether group, a carbonyl group or an alkylene group having from 1 to 4 carbon atoms.

$R_3$ is a divalent group having from 6 to 22 carbon atoms containing at least one aromatic ring, and therefore $m_{31}$, $m_{32}$, $R_{21}$ and $p_{21}$ in the formula (R3-1) are selected in such a manner that the divalent group represented by the formula (R3-1) has from 6 to 22 carbon atoms.

Similarly, $L_{21}$, $m_{33}$, $m_{34}$, $R_{22}$, $R_{23}$, $p_{22}$ and $p_{23}$ in the formula (R3-2) are selected in such a manner that the divalent group represented by the formula (R3-2) has from 12 to 22 carbon atoms.

$X_3$ is defined similarly to $X_1$ in the formula (1), and preferred embodiments thereof are also the same.

The polyimide resin (A1) may further contain a repeating structural unit represented by the following formula (4):

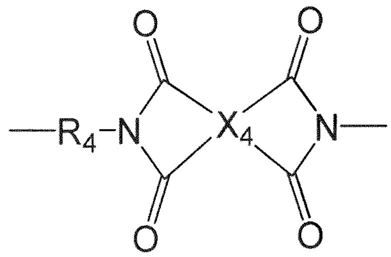

(4)

wherein $R_4$ represents a divalent group containing $-SO_2-$ or $-Si(R_x)(R_y)O-$; $R_x$ and $R_y$ each independently represent a chain aliphatic group having from 1 to 3 carbon atoms, or a phenyl group; and $X_4$ represents a tetravalent group having from 6 to 22 carbon atoms containing at least one aromatic ring.

$X_4$ is defined similarly to $X_1$ in the formula (1), and preferred embodiments thereof are also the same.

The end structure of the polyimide resin (A1) is not particularly limited, and preferably has a chain aliphatic group having 5 to 14 carbon atoms at the end thereof.

The chain aliphatic group may be either saturated or unsaturated, and may be in the form of either linear or branched chain. When the polyimide resin (A1) contains the above particular group at the end thereof, it is possible to obtain a molded product excellent in heat aging resistance.

Example of the saturated chain aliphatic group having from 5 to 14 carbon atoms include an n-pentyl group, an n-hexyl group, an n-heptyl group, an n-octyl group, an n-nonyl group, an n-decyl group, an n-undecyl group, a lauryl group, an n-tridecyl group, an n-tetradecyl group, an isopentyl group, a neopentyl group, a 2-methylpentyl group, a 2-methylhexyl group, a 2-ethylpentyl group, a 3-ethylpentyl group, an isooctyl group, a 2-ethylhexyl group, a 3-ethylhexyl group, an isononyl group, a 2-ethyloctyl group, an isodecyl group, an isododecyl group, an isotridecyl group and an isotetradecyl group.

Example of the unsaturated chain aliphatic group having from 5 to 14 carbon atoms include a 1-pentenyl group, a 2-pentenyl group, a 1-hexenyl group, a 2-hexenyl group, a 1-heptenyl group, a 2-heptenyl group, a 1-octenyl group, a 2-octenyl group, a nonenyl group, a decenyl group, a dodecenyl group, a tridecenyl group and a tetradecenyl group.

Among these, the chain aliphatic group is preferably a saturated chain aliphatic group, and more preferably a saturated linear aliphatic group. The chain aliphatic group preferably has 6 or more carbon atoms, more preferably 7 or more carbon atoms and further preferably 8 or more carbon atoms, and preferably has 12 or less carbon atoms, more preferably 10 or less carbon atoms and further preferably 9 or less carbon atoms from the viewpoint of achievement of heat aging resistance. The chain aliphatic group may be adopted singly or in combinations of two or more.

The chain aliphatic group is particularly preferably at least one selected from the group consisting of an n-octyl group, an isooctyl group, a 2-ethylhexyl group, an n-nonyl group, an isononyl group, an n-decyl group and an isodecyl group, further preferably at least one selected from the group consisting of an n-octyl group, an isooctyl group, a 2-ethylhexyl group, an n-nonyl group, and an isononyl group, and most preferably at least one selected from the group consisting of an n-octyl group, an isooctyl group, and a 2-ethylhexyl group.

The polyimide resin (A1) preferably contains only a chain aliphatic group having from 5 to 14 carbon atoms, besides a terminal amino group and a terminal carboxy group, at the end thereof from the viewpoint of heat aging resistance. When a group, besides the above groups, is contained at the end, the content thereof with respect to the chain aliphatic group having from 5 to 14 carbon atoms is preferably 10 mol% or less and more preferably 5 mol% or less.

The content of the chain aliphatic group having from 5 to 14 carbon atoms in the polyimide resin (A1) is preferably 0.01 mol% or more, more preferably 0.1 mol% or more, and further preferably 0.2 mol% or more based on the total 100 mol% of the total repeating structural units constituting the polyimide resin (A 1) from the viewpoint of exerting excellent heat aging resistance. In order that a sufficient molecular weight is ensured and good mechanical strength are achieved,

the content of the chain aliphatic group having from 5 to 14 carbon atoms in the polyimide resin (A1) is preferably 10 mol% or less, more preferably 6 mol% or less and further preferably 3.5 mol% or less based on the total 100 mol% of the total repeating structural units constituting the polyimide resin (A1).

The content of the chain aliphatic group having from 5 to 14 carbon atoms in the polyimide resin (A1) can be determined by depolymerization of the polyimide resin (A1).

The polyimide resin (A1) preferably has a melting point of 360°C or less and a glass transition temperature of 150°C or more. The melting point of the polyimide resin (A1) is more preferably 280°C or more and further preferably 290°C or more from the viewpoint of heat resistance, and is preferably 345°C or less, more preferably 340°C or less, and further preferably 335°C or less from the viewpoint of exerting high molding processability. In addition, the glass transition temperature of the polyimide resin (A1) is more preferably 160°C or more and more preferably 170°C or more from the viewpoint of heat resistance, and is preferably 250°C or less, more preferably 230°C or less, and further preferably 200°C or less from the viewpoint of exerting high molding processability.

Both the melting point and the glass transition temperature of the polyimide resin (A1) can be measured by a differential scanning calorimeter and specifically can be measured by the methods described in Examples.

In addition, in the polyimide resin (Al), the exothermic amount (hereinafter, also simply referred to as "exothermic amount of crystallization") of the crystallization exothermic peak observed in melting and then cooling of the polyimide resin at a cooling rate of 20°C/min with differential scanning calorimetric measurement is preferably 5.0 mJ/mg or more, more preferably 10.0 mJ/mg or more, and further preferably 17.0 mJ/mg or more from the viewpoint of enhancement of crystallinity, heat resistance, mechanical strength, and chemical resistance. The upper limit of the exothermic amount of crystallization is not particularly limited, and is usually 45.0 mJ/mg or less. The exothermic amount of crystallization of the polyimide resin (A1) specifically can be measured by the method described in Examples.

The logarithmic viscosity of the polyimide resin (A1) at 30°C in a 0.5 mass% concentrated sulfuric acid solution is preferably 0.2 to 2.0 dL/g and more preferably 0.3 to 1.8 dL/g. When the logarithmic viscosity is 0.2 dL/g or more, a molded product formed of the polyimide resin composition obtained has sufficient mechanical strength, and when the logarithmic viscosity is 2.0 dL/g or less, molding processability and handleability are good. The logarithmic viscosity $\mu$ is obtained according to the following expression by measuring the elapsed times for flowing concentrated sulfuric acid and the polyimide resin solution at 30°C with a Cannon-Fenske viscometer.

$$\mu = \ln(ts/t_0)/C$$

$t_0$: elapsed time for flowing concentrated sulfuric acid
ts: elapsed time for flowing polyimide resin solution
C: 0.5 (g/dL)

The weight average molecular weight Mw of the polyimide resin (A1) is preferably in the range of 10,000 to 150,000, more preferably 15,000 to 100,000, further preferably 20,000 to 80,000, still further preferably 30,000 to 70,000, and still further preferably 35,000 to 65,000. When the weight average molecular weight Mw of the polyimide resin (A1) is 10,000 or more, the mechanical strength is good, and when the Mw is 150,000 or less, the molding processability is good.

The weight average molecular weight Mw of the polyimide resin (A1) can be measured by a gel permeation chromatography (GPC) method using polymethyl methacrylate (PMMA) as a standard sample.

(Method for producing thermoplastic polyimide resin (A))

The thermoplastic polyimide resin (A) may be produced by reacting a tetracarboxylic acid component and a diamine component. Hereinafter, a method for producing the polyimide resin (A1) will be described as an example.

In the production of the polyimide resin (A 1), the tetracarboxylic acid component contains an aromatic tetracarboxylic acid and/or a derivative thereof, and the diamine component contains an aliphatic diamine containing at least one alicyclic hydrocarbon structure and a chain aliphatic diamine.

An aromatic tetracarboxylic acid is a compound having four carboxy groups that are bonded directly to the aromatic ring, and may contain an alkyl group in the structure thereof. The aromatic tetracarboxylic acid preferably has from 6 to 26 carbon atoms. Preferred examples of the aromatic tetracarboxylic acid include pyromellitic acid, 2,3,5,6-toluenetetracarboxylic acid, 3,3',4,4'-benzophenonetetracarboxylic acid, 3,3',4,4'-biphenyltetracarboxylic acid, and 1,4,5,8-naphthalenetetracarboxylic acid. Among these, pyromellitic acid is more preferred.

Examples of the derivative of the aromatic tetracarboxylic acid include an anhydride or an alkyl ester compound of an aromatic tetracarboxylic acid. The derivative of the tetracarboxylic acid preferably has from 6 to 38 carbon atoms. Examples of the anhydride of the aromatic tetracarboxylic acid include pyromellitic monoanhydride, pyromellitic dianhydride, 2,3,5,6-toluenetetracarboxylic dianhydride, 3,3',4,4'-diphenylsulfonetetracarboxylic dianhydride, 3,3',4,4'-benzophenonetetracarboxylic dianhydride, 3,3',4,4'-biphenyltetracarboxylic dianhydride, and 1,4,5,8-naphthalenetetracarboxylic dianhydride. Examples of the alkyl ester compound of the aromatic tetracarboxylic acid include dimethyl pyromellitate, diethyl pyromellitate, dipropyl pyromellitate, diisopropyl pyromellitate, dimethyl 2,3,5,6-toluenetetracarboxylate, dimethyl 3,3',4,4'-diphenylsulfonetetracarboxylate, dimethyl 3,3',4,4'-benzophenonetetracarboxylate, dimethyl 3,3',4,4'-biphenyltetracarboxylate, and dimethyl 1,4,5,8-naphthalenetetracarboxylate. The alkyl group in the alkyl ester compound of the aromatic tetracarboxylic acid preferably has from 1 to 3 carbon atoms.

The aromatic tetracarboxylic acid and/or the derivative thereof may be used as a sole compound selected from the aforementioned compounds or may be used as a combination of two or more compounds.

The aliphatic diamine containing at least one alicyclic hydrocarbon structure preferably has from 6 to 22 carbon atoms, and preferred examples thereof include 1,2-bis(aminomethyl)cyclohexane, 1,3-bis(aminomethyl)cyclohexane, 1,4-bis(aminomethyl)cyclohexane, 1,2-cyclohexanediamine, 1,3-cyclohexanediamine, 1,4-cyclohexanediamine, 4,4'-diaminodicyclohexylmethane, 4,4'-methylenebis(2-methylcyclohexylamine), carvone diamine, limonene diamine, isophorone diamine, norbornane diamine, bis(aminomethyl)tricyclo[5.2.1.0$^{2,6}$]decane, 3,3'-dimethyl-4,4'-diaminodicyclohexylmethane, and 4,4'-diaminodicyclohexylpropane. These compounds may be used solely or may be used as a combination of two or more compounds selected therefrom. Among these, 1,3-bis(aminomethyl)cyclohexane is preferably used. An aliphatic diamine containing an alicyclic hydrocarbon structure generally has conformational isomers, and the ratio of the cis isomer and the trans isomer is not particularly limited.

The chain aliphatic diamine may be in the form of either linear or branched chain, and has preferably from 5 to 16 carbon atoms, more preferably from 6 to 14 carbon atoms and further preferably from 7 to 12 carbon atoms. The linear moiety having from 5 to 16 carbon atoms may contain an ether bond in the course thereof. Preferred examples of the chain aliphatic diamine include 1,5-pentamethylenediamine, 2-methylpentane-1,5-diamine, 3-methylpentane-1,5-diamine, 1,6-hexamethylenediamine, 1,7-heptamethylenediamine, 1,8-octamethylenediamine, 1,9-nonamethylenediamine, 1,10-decamethylenediamine, 1,11-undecamethylenediamine, 1,12-dodecamethylenediamine, 1,13-tridecamethylenediamine, 1,14-tetradecamethylenediamine, 1,16-hexadecamethylenediamine, and 2,2'-(ethylenedioxy)bis(ethyleneamine).

The chain aliphatic diamine may be used as a sole compound or as a mixture of plural kinds thereof. Among these, a chain aliphatic diamine having from 8 to 10 carbon atoms can be preferably used, and at least one selected from the group consisting of 1,8-octamethylenediamine and 1,10-decamethylenediamine can be particularly preferably used.

In the production of the polyimide resin (A1), the molar ratio of the charged amount of the aliphatic diamine containing at least one alicyclic hydrocarbon structure with respect to the total amount of the aliphatic diamine containing at least one alicyclic hydrocarbon structure and the chain aliphatic diamine is preferably 20 to 70 mol%. The molar ratio is preferably 25 mol% or more, more preferably 30 mol% or more, further preferably 32 mol% or more, and is preferably 60 mol% or less, more preferably 50 mol% or less, further preferably less than 40 mol, and further preferably 35 mol% or less from the viewpoint of exerting high crystallinity.

The diamine component may contain a diamine containing at least one aromatic ring. The diamine containing at least one aromatic ring preferably has from 6 to 22 carbon atoms, and examples thereof include o-xylylenediamine, m-xylylenediamine, p-xylylenediamine, 1,2-diethynylbenzenediamine, 1,3-diethynylbenzenediamine, 1,4-diethynylbenzenediamine, 1,2-diaminobenzene, 1,3-diaminobenzene, 1,4-diaminobenzene, 4,4'-diaminodiphenyl ether, 3,4'-diaminodiphenyl ether, 4,4'-diaminodiphenylmethane, α,α'-bis(4-aminophenyl)-1,4-diisopropylbenzene, α,α'-bis(3-aminophenyl)-1,4-diisopropylbenzene, 2,2-bis(4-(4-aminophenoxy)phenyl)propane, 2,6-diaminonaphthalene and 1,5-diaminonaphthalene.

When a diamine containing at least one aromatic ring is contained, the lower limit of the molar ratio of the charged amount of the diamine containing at least one aromatic ring with respect to the total amount of the aliphatic diamine containing at least one alicyclic hydrocarbon structure and the chain aliphatic diamine is not particularly limited but needs to exceed 0 mol%. The molar ratio is preferably 5 mol% or more and more preferably 10 mol% or more, from the viewpoint of enhancement of the heat resistance.

The molar ratio is preferably 25 mol% or less, and from the viewpoint of maintenance of the crystallinity, is preferably 20 mol% or less and more preferably 15 mol% or less. The molar ratio is preferably 12 mol% or less, more preferably 10 mol% or less, further preferably 5 mol% or less, and still more preferably 0 mol%, from the viewpoint of less coloration of the polyimide resin.

In the production of the polyimide resin (A1), the charged amount ratio of the tetracarboxylic acid component and the diamine component is preferably from 0.9 to 1.1 mol of the diamine component per 1 mol of the tetracarboxylic acid component.

In the production of the polyimide resin (Al), an end capping agent is preferably mixed in addition to the tetracarboxylic acid component and the diamine component. The end capping agent is preferably at least one selected from the group consisting of a monoamine compound and a dicarboxylic acid compound. The amount of the end capping agent to be used may be any amount as long as a desired amount of an end group can be introduced into the polyimide

resin (Al), and the amount is preferably 0.0001 to 0.1 mol, more preferably 0.001 to 0.06 mol, and further preferably 0.002 to 0.035 mol, per 1 mol of the tetracarboxylic acid and/or the derivative thereof.

Among these, the monoamine end capping agent is preferable as the end capping agent, and a monoamine containing a chain aliphatic group having from 5 to 14 carbon atoms is more preferable and a monoamine containing a saturated linear aliphatic group having from 5 to 14 carbon atoms is further preferable from the viewpoint of introduction of the chain aliphatic group having from 5 to 14 carbon atoms into the end of the polyimide resin (A1) for enhancement of heat aging resistance.

The end capping agent is particularly preferably at least one selected from the group consisting of n-octylamine, isooctylamine, 2-ethylhexylamine, n-nonylamine, isononylamine, n-decylamine, and isodecylamine, further preferably at least one selected from the group consisting of n-octylamine, isooctylamine, 2-ethylhexylamine, n-nonylamine, and isononylamine, and most preferably at least one selected from the group consisting of n-octylamine, isooctylamine, and 2-ethylhexylamine.

As a polymerization method for producing the thermoplastic polyimide resin (A), a known polymerization method may be applied. For example, as a method for producing the polyimide resin (A1), the method described in WO2016/147996 may be employed.

<Carbon fiber (B)>

The thermoplastic polyimide resin composition of the present invention contains carbon fiber as the component (B), from the viewpoint of enhancement of rigidity.

Examples of the component (B) used in the composition of the present invention include polyacrylonitrile-based carbon fiber and pitch-based carbon fiber. The form of the carbon fiber is not particularly limited. Either of continuous fiber and short fiber can be used depending on the form of the thermoplastic polyimide resin composition and molded product to be obtained, and both the fibers may be used in combination.

The form of the thermoplastic polyimide resin composition will be described below. When the composition is in the form of pellets, the component (B) is preferably short fiber having an average fiber length of less than 10 mm, from the viewpoint of extrusion moldability and the like. The average fiber length of the component (B) as short fiber is more preferably 0.5 to 8 mm and further preferably 2 to 8 mm.

The average fiber diameter of the component (B) is preferably 1 to 100 μm, more preferably 3 to 50 μm, and further preferably 4 to 20 μm. When the average fiber diameter of the component (B) falls within this range, processing is easy, and the resulting molded product is excellent in rigidity.

The average fiber length (in the case of short fiber) and the average fiber diameter of the component (B) can be determined as follows: the carbon fiber is observed under a scanning electron microscope (SEM) or the like, 50 or more fibers are selected at random, their lengths or diameters are measured, and a number average fiber length or fiber diameter is calculated.

The component (B) usually has filaments in the range of 500 to 100,000, preferably 5,000 to 80,000, and more preferably 10,000 to 70,000.

The component (B) is preferably surface-treated with a surface treatment agent in order to enhance wettability and interface adherence with the thermoplastic polyimide resin (A). The concept of the surface treatment agent also includes a bundling agent and a sizing agent.

Examples of the surface treatment agent include an epoxy-based material, a urethane-based material, an acryl-based material, a polyamide-based material, a polyester-based material, a vinyl ester-based material, a polyolefin-based material, and a polyether-based material. These can be used singly or in combinations of two or more thereof. At least one selected from the group consisting of epoxy-based materials and urethane-based materials is preferred as the surface treatment agent from the viewpoint that higher rigidity is achieved.

The amount of the component (B) to be treated by the surface treatment agent can be appropriately selected in accordance with the type of the surface treatment agent, the form of the carbon fiber, and the like. For example, when short fiber is used as the component (B), short fiber surface-treated by a sizing agent is preferred from the viewpoint that the dispersibility in the thermoplastic polyimide resin (A) is enhanced. The amount of the sizing agent attached is preferably in the range of 1.5 to 10 mass% and more preferably in the range of 2 to 5 mass%.

Commercially available products may be used as the component (B). Examples of commercially available carbon fiber (short fiber) include Chopped Fiber "CFUW", "CFEPP", "CFEPU", "CFA4", "FX1", "EX1", "BF-WS", and "CF-N" series, produced by Nippon Polymer Sangyo Co., Ltd., "PYROFIL Chopped Fiber" series produced by Mitsubishi Chemical Corporation, and "Tenax Chopped Fiber" series produced by TEIJIN LIMITED.

<Fluorine resin (C)>

The thermoplastic polyimide resin composition of the present invention contains a fluorine resin as the component (C) from the viewpoint of enhancement of slidability.

Examples of the component (C) used in the composition of the present invention include polytetrafluoroethylene (PTFE), polychlorotrifluoroethylene (PCTFE), polyvinylidene fluoride (PVDF), a copolymer of tetrafluoroethylene and hexafluoropropylene (FEP), a copolymer of tetrafluoroethylene and perfluoroalkyl vinyl ether (PFA), a copolymer of tetrafluoroethylene and ethylene (ETFE), and a copolymer of tetrafluoroethylene and perfluoroalkoxy ethylene, and these can be used singly or in combinations of two or more thereof. Among these, polytetrafluoroethylene is preferred from the viewpoint of enhancement of slidability and heat resistance.

The component (C) used in the present invention is preferably in a powder form from the view point of dispersibility in the component (A) and handleability. When the component (C) is in a powder form, the average particle size (D50) is not particularly limited and is preferably 1 to 50 μm, more preferably 2 to 40 μm, further preferably 3 to 30 μm, and still further preferably 5 to 20 μm, from the view point of dispersibility in the component (A) and handleability.

The average particle size (D50) can be measured with a laser diffracted light scattering particle size distribution analyzer.

Commercially available products may be used as the component (C). Among commercially available fluorine resins, examples of polytetrafluoroethylene include "KT-300M", "KT-400M", "KT-600M", "KTL-450A", "KTL-450", "KTL-610", "KTL-610A", "KTL-620", "KTL-20N", "KTL-10N", "KTL-10S", "KTL-9N", "KTL-9S", "KTL-8N", "KTL-4N", "KTL-2N", "KTL-1N", "KTL-8F", "KTL-8FH", and "KTL-500F" produced by KITAMURA LIMITED, 3M Dyneon PTFE Micropowders "TF9201Z", "TF9205", and "TF9207" produced by 3M Japan Limited, and "POLYFLON PTFE-M" series, "POLYFLON PTFE-F" series, and "POLYFLON PTFE LUBRON" series produced by DAIKIN INDUSTRIES, Ltd.

<Inorganic filler (D)>

The thermoplastic polyimide resin composition of the present invention contains an inorganic filler as the component (D), from the viewpoint of reduction in the specific abrasion loss of a molded product to be obtained. The component (D) in the present invention does not include a filler made only of carbon atoms, such as graphite.

The shape of the component (D) used in the composition of the present invention is not particularly limited, and examples thereof include spherical, planar, and fibrous shapes.

Examples of the component (D) include silica, alumina, kaolinite, wollastonite (calcium silicate), mica, talc, clay, sericite, magnesium carbonate, calcium carbonate, magnesium sulfate, calcium oxide, titanium oxide, silicon carbide, antimony trisulfide, tin sulfide, copper sulfide, iron sulfide, bismuth sulfide, zinc sulfide, metal powder, glass powder, glass flakes, glass beads, glass balloons, metal fiber, silica fiber, silica alumina fiber, alumina fiber, zirconia fiber, boron nitride fiber, silicon nitride fiber, boron fiber, potassium titanate whisker, aluminum borate whisker, magnesium-based whisker, and silicon-based whisker, and these can be used singly or in combinations of two or more thereof.

Among those described above, the component (D) is preferably an inorganic filler containing a calcium element, more preferably at least one selected from the group consisting of calcium carbonate and wollastonite, and further preferably wollastonite, from the viewpoint of further reduction in the specific abrasion loss of a molded product to be obtained. An inorganic filler containing a calcium element, which has a moderately high Moh's hardness, enhances the hardness of a molded product to be obtained as well as can suppress an increase in the abrasion loss due to the action of abrasion powder resulted from abrasion of the molded product, as an abrasive agent, and thus is considered to enable the specific abrasion loss to be further reduced.

The magnitude of the component (D) depends on the shape of the inorganic filler. For example, in the case of a spherical or planar inorganic filler, the average particle size is preferably 0.01 to 50 μm, more preferably 0.1 to 30 μm, further preferably 0.2 to 20 μm, still further preferably 0.2 to 15 μm, still further preferably 0.2 to 10 μm, and still further preferably 0.5 to 5 μm, from the viewpoint of enhancement of the mechanical strength, reduction in the specific abrasion loss, and enhancement of the dispersibility in the component (A). The average particle size can be measured according to the same method as for the component (C).

In the case of a fibrous inorganic filler, the average fiber length is preferably 5 to 300 μm, more preferably 10 to 180 μm, and the average fiber diameter is preferably 0.1 to 100 μm, more preferably 0.2 to 50 μm, and further preferably 0.2 to 20 μm, from the viewpoint of enhancement of the mechanical strength, reduction in the specific abrasion loss, and enhancement of the dispersibility in the component (A). The average fiber length and the average fiber diameter of the fibrous inorganic filler can be measured according to the same method as for the component (B).

<Content>

The contents of the components (A) to (D) in the thermoplastic polyimide resin composition of the present invention preferably fall within the following ranges, from the viewpoint that a highly-slidable molded product having high rigidity and having a low dynamic friction coefficient and a small specific abrasion loss is obtained.

The content of the component (A) in the thermoplastic polyimide resin composition is 30 to 60 mass%, preferably 35 to 60 mass%, and more preferably 40 to 55 mass%. When the content of the component (A) in the thermoplastic polyimide resin composition is 30 mass% or more, the molding processability is good, and when the content is 60 mass%

or less, the rigidity and the slidability are good.

The content of the component (B) in the thermoplastic polyimide resin composition is 5 to 50 mass%, preferably 5 to 40 mass%, more preferably 10 to 35 mass%, and further preferably 10 to 30 mass%. When the content of the component (B) in the thermoplastic polyimide resin composition is 5 mass% or more, an effect of enhancing the rigidity is obtained, and when the content is 50 mass% or less, a decrease in the molding processability and an increase in the specific abrasion loss and in the dynamic friction coefficient can be suppressed.

The content of the component (C) in the thermoplastic polyimide resin composition is 5 to 20 mass% and preferably 5 to 15 mass%. When the content of the component (C) in the thermoplastic polyimide resin composition is 5 mass% or more, an effect of enhancing the slidability is obtained, and when the content is 20 mass% or less, the rigidity can be maintained.

The content of the component (D) in the thermoplastic polyimide resin composition is 1 to 40 mass%, preferably 5 to 40 mass%, more preferably 5 to 30 mass%, and further preferably 10 to 30 mass%. When the content of the component (D) in the thermoplastic polyimide resin composition is 1 mass% or more, the specific abrasion loss can be reduced, and when the content is 40 mass% or less, the molding processability can be maintained.

The total content of the components (A) to (D) in the thermoplastic polyimide resin composition is preferably 50 mass% or more, more preferably 65 mass% or more, further preferably 70 mass% or more, still further preferably 80 mass% or more, still further preferably 90 mass% or more, and still further preferably 95 mass% or more, and is also 100 mass% or less, from the viewpoint of achievement of the effects of the present invention.

<Graphite (E)>

The thermoplastic polyimide resin composition of the present invention can further contain graphite as a component (E), from the viewpoint of impartation of various properties such as blackness and flame resistance.

The graphite used as the component (E) may be either natural graphite or artificial graphite, and examples thereof include natural graphite such as flake graphite, vein graphite (also referred to as lump graphite), amorphous graphite, and spherical graphite, expandable graphite obtained by chemically treating flake graphite with concentrated sulfuric acid or the like and then heating the graphite, expanded graphite obtained by heating expandable graphite at a high temperature, and artificial graphite.

Among these, the graphite used as the component (E) is preferably natural graphite and more preferably at least one selected from the group consisting of flake graphite and vein graphite.

The component (E) may be surface-treated with a silane coupling agent, a titanate-based coupling agent, an aluminate-based coupling agent or the like as long as the effects of the present invention are not impaired. The average particle size of the component (E) is not particularly limited, and is preferably 1 to 50 μm, more preferably 2 to 40 μm, further preferably 3 to 30 μm, and still further preferably 5 to 20 μm, from the viewpoint of enhancement of various properties such as blackness and flame resistance and from the viewpoint of dispersibility in the component (A) and handleability.

The average particle size can be measured according to the same method as for the component (C).

Commercially available products may be used as the graphite of the component (E). Examples of commercially available graphite include flake graphite: "BF-3AK", "BF-15AK", "FBF", "CBR", "CPB-6S", "CPB-3", "96L", "96L-3", and "K-3", vein graphite: "BF-10AK" and "HLP", and spherical graphite: "WF-15C" produced by Chuetsu Graphite Works Co., Ltd.; and vein graphite powder: CP series, CB series, F# series, amorphous graphite powder: "Blue P", "AP", and "P#1", artificial graphite powder: PAG series and HAG series, spheroidized graphite powder: CGC series, CGB series, flake graphite powder: "GR-15", "CMX-40", "UP-20", "UP-35N", "UP-15N", and "UP-5N", and additionally, ACP series, ACB series, and SP series, produced by Nippon Kokuen Group.

When the thermoplastic polyimide resin composition contains the component (E), the content of the component (E) of the thermoplastic polyimide resin composition is preferably 0.1 to 15 mass%, more preferably 1 to 15 mass%, further preferably 5 to 15 mass%, and still further preferably 5 to 10 mass%. When the content of the component (E) in the thermoplastic polyimide resin composition is 0.1 mass% or more, an effect of imparting various properties such as blackness and flame resistance is easily obtained, and when the content is 15 mass% or less, a decrease in the molding processability can be suppressed.

When importance is put on enhancement of the mechanical strength and the slidability of a molded product to be obtained, the content of the component (E) in the thermoplastic polyimide resin composition is preferably less than 10 mass% and more preferably 5 mass% or less.

<Additives and the like>

In the thermoplastic polyimide resin composition of the present invention, additives may be mixed as required, such as a delusterant, a nucleating agent, a plasticizer, an antistatic agent, an anti-coloring agent, an anti-gelling agent,

a colorant, an antioxidant, a conducting agent, a resin-modifying agent, and a flame retardant.

The amount of the above additive mixed is not particularly limited, and is usually 50 mass% or less, preferably 35 mass% or less, more preferably 0.0001 to 30 mass%, further preferably 0.001 to 15 mass%, still further preferably 0.01 to 10 mass%, and still further preferably 0.01 to 5 mass% in the thermoplastic polyimide resin composition, from the viewpoint of expressing the effect of the additive without impairing the effects of the present invention.

A resin other than the component (A) may also be mixed in the thermoplastic polyimide resin composition of the present invention, without impairing the characteristics of the composition. Examples of the resin include a polyamide resin, a polyester resin, a polycarbonate resin, a polyetherimide resin, a polyamideimide resin, a polyphenylene ether imide resin, a polyphenylene sulfide resin, a polysulfone resin, a polyethersulfone resin, a polyallylate resin, a liquid crystal polymer, a polyether ether ketone resin, a polyether ketone resin, a polyether ketone ketone resin, a polyether ether ketone ketone resin, and a polybenzoimidazole resin.

When a resin other than the component (A) is used in combination, the rate of such a resin to be mixed is not particularly limited, without impairing the characteristics of the thermoplastic polyimide resin composition.

The thermoplastic polyimide resin composition of the present invention may have any form, but is preferably a powder or pellets and more preferably pellets, from the viewpoint that the resin composition is subjected to extrusion molding to produce a molded product.

Pellets made of the thermoplastic polyimide resin composition can be prepared as follows, for example. First, the component (C), the component (D), and if necessary, the component (E), and other various optional components are added and dry blended. Next, the dry blended product and the component (B) can be side-fed to the component (A) melted in an extruder in advance, followed by melt-kneading and extruding into a strand, and cutting the strand to obtain pellets. The pellets are introduced in various kinds of molding machines and heat-molded by a method described below, thereby being easily produced into a molded product having a desired shape.

[Molded product]

The present invention provides a molded product including the thermoplastic polyimide resin composition.

Since the thermoplastic polyimide resin composition of the present invention has thermoplasticity derived from the component (A), the molded product of the present invention can be easily produced by heat-molding the polyimide resin composition. For example, the pellets of the thermoplastic polyimide resin composition obtained by the method may be dried, then introduced in various kinds of molding machines and heat-molded, thereby producing a molded product having a desired shape. Examples of the heat molding method include injection molding, extrusion molding, sheet extrusion molding, blow molding, heat press molding, vacuum molding, pneumatic molding, laser molding, insert molding, welding, and heat adhesion, and the polyimide molding material of the present invention may be molded by any molding method that includes a heat melting step. Among these, injection molding is preferable because molding is enabled without setting the molding temperature to an elevated temperature more than 400°C, for example.

The thermoplastic polyimide resin composition of the present invention can be produced into a highly-slidable molded product excellent in molding processability as well as having high rigidity and having a low dynamic friction coefficient and a small specific abrasion loss. The molded product can be applied to applications in which excellent rigidity and sliding properties are required, for example, various bearing such as bearings for automobiles and bearings for copiers, gears, bearings, bushes, mechanical seals, seals for transmissions, and the like.

Examples

Hereinafter, the present invention will be described more concretely with reference to Examples. Any materials, amount of use, ratio, processing contents, procedures of processing, and the like shown in examples below may appropriately be modified without departing from the spirit of the present invention. Accordingly, the scope of the invention should not be limited to the specific examples shown below.

Various measurements and evaluations in each Production Example and Example were carried out in the following manners.

<Infrared spectroscopy (IR measurement)>

The IR measurement of the thermoplastic polyimide resin was performed with "JIR-WINSPEC 50", produced by JEOL, Ltd.

<Logarithmic viscosity $\mu$>

The thermoplastic polyimide resin was dried at from 190 to 200°C for 2 hours, and then 0.100 g of the polyimide

resin was dissolved in 20 mL of concentrated sulfuric acid (96%, produced by Kanto Chemical Co., Inc.) to form a polyimide resin solution, and the measurement was made at 30°C with a Cannon-Fenske viscometer using the polyimide resin solution as a measurement sample. The logarithmic viscosity $\mu$ was obtained according to the following expression.

$$\mu = \ln(ts/t_0)/C$$

$t_0$: elapsed time for flowing concentrated sulfuric acid
ts: elapsed time for flowing polyimide resin solution
C: 0.5 g/dL

<Melting point, glass transition temperature, crystallization temperature, and exothermic amount of crystallization>

The melting point (Tm), the glass transition temperature (Tg), the crystallization temperature (Tc) and the exothermic amount of crystallization ($\Delta$Hm) of the thermoplastic polyimide resin were measured with a differential scanning calorimeter ("DSC-6220", produced by SII Nanotechnology, Inc.).

The thermoplastic polyimide resin was subjected to the following thermal history in a nitrogen atmosphere. The condition of the thermal history included the first heating (heating rate: 10°C/min), then cooling (cooling rate: 20°C/min), and then second heating (heating rate: 10°C/min).

The melting point (Tm) was determined by reading the peak top value of the endothermic peak observed in the second heating. The glass transition temperature (Tg) was determined by reading the value observed in the second heating. The crystallization temperature (Tc) was determined by reading the peak top value of the exothermic peak observed in cooling.

The exothermic amount of crystallization $\Delta$Hm (mJ/mg) was calculated from the area of the exothermic peak observed in cooling.

<Crystallization half-time>

The crystallization half-time of the thermoplastic polyimide resin was measured with a differential scanning calorimeter ("DSC-6220", produced by SII Nanotechnology, Inc.).

Under a nitrogen atmosphere, a thermoplastic polyimide resin was held at 420°C for 10 minutes for melting the thermoplastic polyimide resin completely and then quenched at a cooling rate of 70°C/min, during which the time required from the appearance of the crystallization peak observed to the peak top thereof was calculated. In Table 1, the case where the crystallization half-time was 20 seconds or less was denoted by "< 20".

<Weight average molecular weight>

The weight average molecular weight (Mw) of the thermoplastic polyimide resin was measured with a gel permeation chromatography (GPC) measurement apparatus "Shodex GPC-101" produced by Showa Denko K.K. under the following conditions:

Column: Shodex HFIP-806M
Mobile phase solvent: HFIP containing 2 mM sodium trifluoroacetate
Column temperature: 40°C
Flow rate of mobile phase: 1.0 mL/min
Specimen concentration: about 0.1 mass%
Detector: IR detector
Amount of injection: 100 $\mu$m
Calibration curve: standard PMMA

<Bending strength and flexural modulus>

The pellets produced in each example were dried at 150°C for 6 hours and injection molded using an injection molding machine ("ROBOSHOT $\alpha$-S30iA", produced by FANUC CORPORATION) under conditions including a cylinder temperature of 380°C and a mold temperature of 200°C to prepare an ISO multi-purpose specimen.

In the injection molding, the resin flow rate was set to be 300 mm/s, which was calculated from the cross sectional area of the center portion of the ISO tensile specimen. The injection conditions were set such that the pressure was switched to the secondary pressure (VP) when 80% of the mold was filled with the resin, and switching to holding

pressure was made. The holding pressure was 80% of the primary pressure for 15 seconds.

After the ISO multi-purpose specimen was cut to 80 mm × 10 mm × 4 mm in thick, the bending strength (unit: MPa) and the flexural modulus (unit: GPa) were measured in accordance with ISO 178, using the cut specimen, at a temperature of 23°C.

<Specific abrasion loss and dynamic friction coefficient>

The pellets produced in each example were dried at 150°C for 6 hours and injection molded using an injection molding machine ("PNX60" produced by NISSEI PLASTIC INDUSTRIAL CO., LTD.) under conditions including a cylinder temperature of 385°C and a mold temperature of 200°C to prepare a hollow cylindrical specimen prescribed in JIS K7218:1986 method A.

The specific abrasion loss and the dynamic friction coefficient were measured by a friction and wear tester ("MODELEMF-III-F" produced by A&D Company, Limited) according to JIS K7218:1986 method A, using the hollow cylindrical specimen, using an S45C plate as a counterpart. The measurement was conducted under an environment of 23°C and 50% R.H., under conditions including a testing speed: 0.5 m/s, a load: 80 N, and a testing time: 6 hours.

[Production Example 1] Thermoplastic polyimide resin 1

500 g of 2-(2-methoxyethoxy)ethanol (produced by Nippon Nyukazai Co., Ltd.) and 218.12 g (1.00 mol) of pyromellitic dianhydride (produced by Mitsubishi Gas Chemical Company, Inc.) were introduced in a 2 L separable flask equipped with a Dean-Stark apparatus, a Liebig condenser tube, a thermocouple, and a four-paddle blade. After creation of a nitrogen flow, the mixture was agitated at 150 rpm so as to become a homogeneous suspended solution. On the other hand, 49.79 g (0.35 mol) of 1,3-bis(aminomethyl)cyclohexane (produced by Mitsubishi Gas Chemical Company, Inc., cis/trans ratio = 7/3) and 93.77 g (0.65 mol) of 1,8-octamethylenediamine (produced by Kanto Chemical Co., Inc.) were dissolved in 250 g of 2-(2-methoxyethoxy)ethanol with a 500 mL beaker, thereby preparing a mixed diamine solution. This mixed diamine solution was added into the suspended solution in the flask gradually with a plunger pump. Heat was generated due to the drop addition, but the internal temperature was adjusted to be within the range of 40 to 80°C. The dropwise addition of the mixed diamine solution was carried out in a nitrogen flow state over the whole period. The number of rotations of the agitation blade was set to 250 rpm. After the completion of the dropwise addition, 130 g of 2-(2-methoxyethoxy)ethanol and 1.284 g (0.010 mol) of n-octylamine (produced by Kanto Chemical Co., Inc.) as an end capping agent were added thereto, and the mixture was further agitated. At this stage, a pale yellow polyamic acid solution was obtained. Next, the agitation speed was set to 200 rpm, and the polyamic acid solution in the 2 L separable flask was then heated to 190°C. In this heating process, the deposition of a polyimide resin powder and dehydration associated with imidization were confirmed at a solution temperature of from 120 to 140°C. The solution was kept at 190°C for 30 minutes, then allowed to cool to room temperature, and filtered. The obtained polyimide resin powder was washed with 300 g of 2-(2-methoxyethoxy)ethanol and 300 g of methanol, filtered, and then dried at 180°C for 10 hours with a drier, thereby providing 317 g of a powder of thermoplastic polyimide resin 1.

The measurement of the IR spectrum of thermoplastic polyimide resin 1 showed the characteristic absorption of an imide ring ν (C=O) observed at 1768 and 1697 ($cm^{-1}$). The logarithmic viscosity was 1.30 dL/g, Tm was 323°C, Tg was 184°C, Tc was 266°C, the exothermic amount of crystallization was 21.0 mJ/mg, the crystallization half-time was 20 seconds or less, and Mw was 55,000.

The composition and physical property measurement results of thermoplastic polyimide resin 1 are shown in Table 1. The values expressed in mol% of the tetracarboxylic acid component and the diamine component in Table 1 are values calculated from the charged amount of each component in production of the polyimide resin.

Table 1

| | | Tetracarboxylic acid component (mol% in total tetracarboxylic acid components) | Diamine component (mol% in total diamine components) | | (1)/{(1)+(2)} (mol%) *1 | Tm (°C) | Tg (°C) | Tc (°C) | Exothermic amount of crystallization ΔHm (mJ/mg) | Crystallization half-time (seconds) | Mw |
|---|---|---|---|---|---|---|---|---|---|---|---|
| | | PMDA | 1,3-BAC | OMDA | | | | | | | |
| Production Example 1 | Thermoplastic polyimide resin 1 | 100 | 35 | 65 | 35 | 323 | 184 | 266 | 21.0 | <20 | 55,000 |

* 1: The content ratio of the repeating structural unit of the formula (1) (mol%) with respect to the total of the repeating structural unit of the formula (1) and the repeating structural unit of the formula (2) in thermoplastic polyimide resin 1

Abbreviations in the Table 1 are as follows.

- PMDA; pyromellitic dianhydride
- 1,3-BAC; 1,3-bis(aminomethyl)cyclohexane
- OMDA; 1,8-octamethylenediamine

Examples 1 to 8 and Comparative Examples 1 to 4 (Production and evaluation of thermoplastic polyimide resin composition)

Each component was weighed so as to achieve the composition shown in Table 2 described below. The fluorine resin, inorganic filler, and graphite were blended in a tumbler. Through the base of a twin screw extruder ("HK-25D", produced by Parker Corporation, screw diameter: 25 mm, L/D = 41), the thermoplastic polyimide resin 1 obtained in Production Example 1 was loaded. After melting, the blend component and carbon fiber were side-fed in this order, followed by melt-kneading and extruding into a strand. The temperature of the extruder was set to 340°C, and the screw rotation speed thereof was set to 150 rpm.

A strand extruded from the extruder was cooled in air and then pelletized with a pelletizer ("Fan Cutter FC-Mini-4/N", produced by Hoshi Plastic Co., Ltd.) to prepare pellets made of the resin composition (pellets made of the thermoplastic polyimide resin 1 in Comparative Example 3).

The obtained pellets were used to prepare a specimen as mentioned above, and various evaluations were performed. The results are shown in Table 2.

Table 2

| | | Example | | | | | | | | Comparative Example | | | |
|---|---|---|---|---|---|---|---|---|---|---|---|---|---|
| | | 1 | 2 | 3 | 4 | 5 | 6 | 7 | 8 | 1 | 2 | 3 | 4 |
| (A) Thermoplastic polyimide resin | | 50 | 40 | 50 | 50 | 55 | 50 | 45 | 50 | 70 | 50 | 100 | 80 |
| (B) Carbon fiber | | 10 | 10 | 30 | 30 | 25 | 25 | 25 | 30 | 10 | 30 | | 10 |
| (C) Fluorine resin | | 10 | 10 | 10 | 10 | 10 | 10 | 10 | 10 | 10 | 10 | | 10 |
| (D1) Inorganic filler (wollastonite) | | 20 | 30 | | | | | | | | | | |
| (D2) Inorganic filler (wollastonite) | | | | | 10 | 10 | 15 | 20 | | | | | |
| (D3) Inorganic filler (calcium carbonate) | | | | 10 | | | | | | | | | |
| (D4) Inorganic filler (potassium titanate whisker) | | | | | | | | | 10 | | | | |
| (E) Graphite | | 10 | 10 | | | | | | | 10 | 10 | | |
| Mechanical properties | Flexural modulus (GPa) | 17.0 | 20.5 | 21.7 | 24.1 | 20.2 | 21.9 | 23.3 | 23.5 | 10.8 | 24.6 | 3.0 | 7.8 |
| | Bending strength (MPa) | 176 | 150 | 262 | 276 | 271 | 267 | 254 | 293 | 179 | 217 | 81 | 194 |
| Sliding properties | Specific abrasion loss ($10^{-4}$ $mm^3/N \cdot km$) | 12.0 | 8.5 | 11.3 | 8.6 | 9.4 | 8.9 | 9.6 | 7.1 | 25.0 | 13.6 | ≥2150 | 29.3 |
| | Dynamic friction coefficient | 0.283 | 0.287 | 0.423 | 0.323 | 0.285 | 0.240 | 0.246 | 0.551 | 0.157 | 0.647 | 0.860 | 0.288 |

The details of each component shown in Table 2 are as follows.

<(A) Thermoplastic polyimide resin>

Thermoplastic polyimide resin 1 obtained in Production Example 1

<(B) Carbon fiber>

"EX1-MC C-6" produced by Nippon Polymer Sangyo Co., Ltd., sizing agent: epoxy-based, amount of sizing agent: 3.0 mass%, average fiber diameter: 7 μm, average fiber length: 6 mm, number of filaments: 12,000

<(C) Fluorine resin>

"KT-600M" produced by KITAMURA LIMITED, polytetrafluoroethylene powder, average particle size (D50): 14 μm

<(D) Inorganic filler>

(D1) "NYGLOS8 10013" produced by Imerys S.A., wollastonite, average fiber diameter: 12 μm, average fiber length: 156 μm
(D2) "NYAD M1250" produced by Imerys S.A., wollastonite, average fiber diameter: 4 μm, average fiber length: 12 μm
(D3) "Calcium carbonate NS#100" produced by Nitto Funka Kogyo K.K., average particle size: 2.1 μm
(D4) "TISMO D-102" produced by Otsuka Chemical Co., Ltd., average fiber diameter: 0.3 to 0.6 μm, average fiber length: 10 to 20 μm

<(E) Graphite>

"BF-10AK" produced by Chuetsu Graphite Works Co., Ltd., vein graphite, average particle size (D50): 10 μm

As shown in Table 2, the molded products made of the thermoplastic polyimide resin of the present Examples had a specific abrasion loss of 12.0 ($10^{-4}$ $mm^3$/N·km) or less, had a smaller specific abrasion loss in comparison with molded products obtained in Comparative Examples 1 to 4, and were also able to achieve a dynamic friction coefficient of 0.600 or less. The molded products of the present Examples also had good mechanical properties and exhibited a higher value particularly in flexural modulus than that of Comparative Examples 1, 3, and 4. As can be seen by a comparison of Example 4 and Comparative Example 2, the case in which graphite was used in place of the component (D) is inferior in slidability.

Industrial Applicability

The thermoplastic polyimide resin composition of the present invention can produce a highly-slidable molded product having high rigidity and having a low dynamic friction coefficient and a small specific abrasion loss. The resin composition and the molded product are suitably used in applications in which excellent rigidity and sliding properties are required, for example, various bearing such as bearings for automobiles and bearings for copiers, gears, bearings, bushes, mechanical seals, seals for transmissions, and the like.

## Claims

1. A thermoplastic polyimide resin composition comprising 30 to 60 mass% of a thermoplastic polyimide resin (A), 5 to 50 mass% of carbon fiber (B), 5 to 20 mass% of a fluorine resin (C), and 1 to 40 mass% of an inorganic filler (D).

2. The thermoplastic polyimide resin composition according to claim 1, wherein the component (D) is an inorganic filler comprising a calcium element.

3. The thermoplastic polyimide resin composition according to claim 1 or 2, wherein the component (D) is at least one selected from the group consisting of calcium carbonate and wollastonite.

**4.** The thermoplastic polyimide resin composition according to any one of claims 1 to 3, wherein a content of the component (D) in the thermoplastic polyimide resin composition is 5 to 30 mass%.

**5.** The thermoplastic polyimide resin composition according to any one of claims 1 to 4, wherein a content of the component (B) in the thermoplastic polyimide resin composition is 10 to 30 mass%.

**6.** The thermoplastic polyimide resin composition according to any one of claims 1 to 5, wherein the component (C) is polytetrafluoroethylene.

**7.** The thermoplastic polyimide resin composition according to any one of claims 1 to 6, further comprising 0.1 to 15 mass% of graphite (E).

**8.** The thermoplastic polyimide resin composition according to any one of claims 1 to 7, wherein the component (A) is a polyimide resin (A1) comprising a repeating structural unit represented by the following formula (1) and a repeating structural unit represented by the following formula (2) and having a content ratio of the repeating structural unit of the formula (1) with respect to the total of the repeating structural unit of the formula (1) and the repeating structural unit of the formula (2) of 20 to 70 mol%:

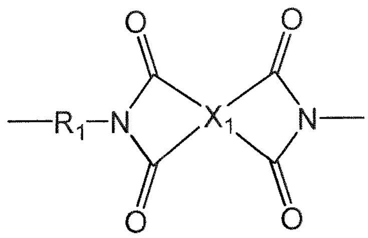

(1)

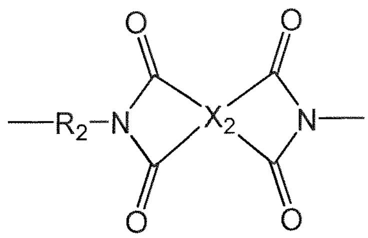

(2)

wherein $R_1$ represents a divalent aliphatic group having from 6 to 22 carbon atoms containing at least one alicyclic hydrocarbon structure; $R_2$ represents a divalent chain aliphatic group having from 5 to 16 carbon atoms; and $X_1$ and $X_2$ each independently represent a tetravalent aromatic group having from 6 to 22 carbon atoms.

**9.** A molded product comprising the thermoplastic polyimide resin composition according to any one of claims 1 to 8.

## INTERNATIONAL SEARCH REPORT

International application No.
**PCT/JP2022/012143**

**A. CLASSIFICATION OF SUBJECT MATTER**

***C08L 79/08***(2006.01)i; ***C08G 73/10***(2006.01)i; ***C08K 3/013***(2018.01)i; ***C08K 3/04***(2006.01)i; ***C08K 7/06***(2006.01)i; ***C08L 27/18***(2006.01)i
FI: C08L79/08 B; C08L27/18; C08K7/06; C08K3/04; C08K3/013; C08G73/10

According to International Patent Classification (IPC) or to both national classification and IPC

**B. FIELDS SEARCHED**

Minimum documentation searched (classification system followed by classification symbols)

C08L1/00-101/14; C08K3/00-13/08; C08G73/10

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 05-262976 A (NTN CORP) 12 October 1993 (1993-10-12)<br>claims 1-2, paragraphs [0001]- [0006], [0009], [0014]-[0019], table 1, examples 2, 5 | 1-6, 9<br>7-8 |
| X<br>A | JP 08-081629 A (MITSUI TOATSU CHEMICALS INC.) 26 March 1996 (1996-03-26)<br>paragraphs [0038], [0042], table 2, comparative example 7 | 1, 4-5, 9<br>2-3, 6-8 |
| Y<br>A | WO 2021/024625 A1 (MITSUBISHI GAS CHEMICAL CO.) 11 February 2021 (2021-02-11)<br>claims 1, 5 paragraphs [0007], [0009], [0062]-[0066] | 7-8<br>1-6, 9 |
| A | WO 2015/020020 A1 (MITSUBISHI GAS CHEMICAL COMPANY, INC.) 12 February 2015 (2015-02-12)<br>entire text | 1-9 |
| A | WO 2012/070401 A1 (ASAHI GLASS CO., LTD.) 31 May 2012 (2012-05-31)<br>entire text | 1-9 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **26 May 2022** | **07 June 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**

International application No.
**PCT/JP2022/012143**

**C. DOCUMENTS CONSIDERED TO BE RELEVANT**

| Category* | Citation of document, with indication, where appropriate, of the relevant passages | Relevant to claim No. |
|---|---|---|
| A | JP 63-008455 A (MITSUI TOATSU CHEMICALS, INC.) 14 January 1988 (1988-01-14) entire text | 1-9 |
| A | JP 05-161368 A (CANON KABUSHIKI KAISHA) 25 June 1993 (1993-06-25) entire text | 1-9 |

Form PCT/ISA/210 (second sheet) (January 2015)

**INTERNATIONAL SEARCH REPORT**
**Information on patent family members**

International application No.
**PCT/JP2022/012143**

| Patent document cited in search report | Publication date (day/month/year) | Patent family member(s) | Publication date (day/month/year) |
|---|---|---|---|
| JP 05-262976 A | 12 October 1993 | (Family: none) | |
| JP 08-081629 A | 26 March 1996 | (Family: none) | |
| WO 2021/024625 A1 | 11 February 2021 | JP 6879438 B1<br>TW 202106806 A | |
| WO 2015/020020 A1 | 12 February 2015 | US 2016/0177062 A1<br>entire text<br>EP 3031864 A1<br>CN 105392842 A<br>KR 10-2016-0040183 A<br>TW 201518409 A | |
| WO 2012/070401 A1 | 31 May 2012 | JP 2012-113119 A<br>US 2013/0313774 A1<br>entire text<br>JP 2012-112448 A<br>EP 2645178 A1<br>CN 103314332 A<br>KR 10-2013-0107333 A<br>CN 104945795 A<br>HK 1212721 A | |
| JP 63-008455 A | 14 January 1988 | US 4816516 A<br>entire text<br>EP 251741 A2<br>KR 10-1990-0005629 B1 | |
| JP 05-161368 A | 25 June 1993 | US 5329201 A<br>entire text | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2005028524 A
- WO 2013118704 A
- WO 2021024624 A
- WO 2021024625 A
- WO 2016147996 A